# EUROPEAN PATENT APPLICATION

(11) **EP 1 786 178 A1**
(43) Date of publication of application: **16.05.2007**
(21) Application number: 05767407.9
(22) Date of filing: 01.08.2005
(51) Int. Cl.: H04M 1/00

(54) **COMMUNICATION TERMINAL**

(30) Priority: 31.08.2004 JP 2004251530
(71) Applicant: MATSUSHITA ELECTRIC INDUSTRIAL CO., LTD., Osaka 571-8501 (JP)
(72) Inventor: TODA, Mitsuji., c/o Matsushita El. Ind.Co.Ltd, Osaka-shi, Osaka 540-6319 (JP); HATANO, Kouji., c/o Matsushita El.Ind.Co. Ltd, Osaka-shi, Osaka 540-6319 (JP)
(74) Representative: Grünecker, Kinkeldey, Stockmair & Schwanhäusser Anwaltssozietät
(86) International application number: PCT/JP2005/014051
(87) International publication number: WO 2006/025172

(57) **Abstract**

An object of the present invention is to properly reflect user's intention changing in accordance with the watching condition so as to improve the convenience. A communication terminal according to the present invention includes a broadcast processing portion 200 that reproduces contents; a call processing portion 100, an answering machine unit 301, an LCD 402 and an SP 403 that processes an incoming call; a history count storing memory 602 and a history count determining unit 601 that grasps watching condition of the contents being reproduced; and a controller 401 and an incoming call accept/reject determining unit 501 that carries out the reproduction of the contents and the processing of the incoming call in an incoming call processing mode corresponding to the watching condition.

## Description

### Technical Field

The present invention relates to a communication terminal having a function of reproducing contents.

### Background Art

In recent years, with the advance of multifunction, portable telephone terminals have been mounted with a television receiving function, a television recording function, an alarm information function, etc. as well as a telephone call function and an E-mail transmitting/receiving function. In such a portable telephone terminal, a user can have a call while watching TV, and can record a TV program as soon as the user receives an incoming call while watching the TV program. Thus, the user can be prevented from missing watching a TV program during a call.

A mobile communication terminal device in which reproducing contents such as audio data recorded in a recording medium and calling can be performed selectively or concurrently to improve the convenience has been known. When an incoming call is received during reproduction of contents, this mobile communication terminal device uses an incoming call determination unit to selectively accept a voice call or reject the voice call and make an answer by an answering machine (for example, see Patent Document 1). Patent Document 1: JP-A-2001-13777

### Disclosure of the Invention

### Problem that the Invention is to Solve

In the background-art portable telephone terminal, however, the criteria for determining whether to accept or reject an answer to an incoming call during watching a TV broadcast program are not defined clearly. In the mobile communication terminal device disclosed in Patent Document 1, when there is an incoming call during reproduction of audio data, the user can merely make a choice between stopping the reproduction of the audio data to make an answer to the incoming call in accordance with a mode set in advance, and changing the mode into an answering machine mode in favor of the reproduction of the audio data.

Accordingly, whether to accept or reject an answer to an incoming call during reproduction of audio data has to be set in advance by an operating button. Often, a failure in remembering to do setting, a failure in operation or the like leads to a failure in an expected operation.

The present invention was developed in consideration of the situation in the background art. An object of the invention is to provide a communication terminal in which user's intention changing in accordance with the watching condition can be reflected properly so that the convenience can be improved.

### Means for Solving the Problem

A communication terminal according to the present invention includes a contents reproducing unit that reproduces contents, an incoming call processing unit that processes an incoming call, a watching condition grasping unit that grasps watching condition of contents being reproduced, and a control unit that carries out the reproduction of the contents and the processing of the incoming call in an incoming call processing mode corresponding to the watching condition. In the configuration, a control unit which carries out the reproduction of the contents and the processing of the incoming call in an incoming call processing mode corresponding to the watching condition is provided. Thus, even if there is an incoming call when a user is watching contents, processing of the incoming call can be changed dynamically in accordance with the watching condition of the contents. Accordingly, the user's intention changing in accordance with the watching condition, for example, between the intention to give priority to watching contents and the intention to give priority to having a call, can be reflected properly, so that the convenience can be improved.

In the communication terminal according to the present invention, the watching condition grasping unit includes a storage unit which stores a use history of the contents, and a grasping unit which grasps the watching condition based on the use history acquired by referring to the storage unit. According to the configuration, the level of the user's attention to contents or the like can be grasped from the use history of the contents so that the watching condition of the contents can be grasped.

In the communication terminal according to the present invention, the watching condition grasping unit includes a storage unit which stores a watching time of the contents, and a grasping unit which grasps the watching condition based on the watching time acquired by referring to the storage unit. According to the configuration, the level of the user's attention to contents or the like can be grasped from the watching time of the contents so that the watching condition of the contents can be grasped.

In the communication terminal according to the present invention, the watching condition grasping unit includes a watching condition detecting unit which detects the watching condition. According to the configuration, the watching condition of contents can be grasped from a detection result of the watching condition detecting unit.

In the communication terminal according to the present invention, the watching condition grasping unit includes a capturing unit which captures an eye of a user watching the contents, and a grasping unit which grasps the watching condition based on a gazing time of the contents obtained from captured images. According to the configuration, the level of user's concentration on contents or the like can be grasped from the gazing time of the contents so that the watching condition of the contents can be grasped.

In the communication terminal according to the present invention, the control unit carries out the processing of the incoming call so as to continue the reproduction of the contents and provide an automatic answer to the incoming call. According to the configuration, the user can answer a call sender while continuing to watch the contents.

In the communication terminal according to the present invention, the control unit carries out the processing of the incoming call so as to continue the reproduction of the contents and change a mode into an answering machine mode. According to the configuration, the user's intention to want to give priority to watching contents can be reflected so that the convenience can be improved.

In the communication terminal according to the present invention, the control unit carries out the processing of the incoming call so as to continue the reproduction of the contents and notify the user of the incoming call during the reproduction of the contents. According to the configuration, the user can know an incoming call while continuing to watch contents.

In the communication terminal according to the present invention, the control unit carries out the processing of the incoming call so as to continue the reproduction of the contents and notify the user of the incoming call after termination of the reproduction of the contents. According to the configuration, the user can continue to watch contents when an incoming call arrives, and know the incoming call after watching the contents is terminated.

In the communication terminal according to the present invention, the control unit carries out the processing of the incoming call so as to suspend the reproduction of the contents and notify the user of the incoming call after suspension of the reproduction of the contents. According to the configuration, the user can make an answer to an incoming call when the incoming call arrives.

The communication terminal according to the present invention further includes a setting unit for setting a desired incoming call processing mode on the control unit. According to the configuration, the incoming call processing mode can be set in accordance with the user's will.

### Effect of the Invention

In the present invention, a control unit that carries out reproduction of contents and processing of an incoming call in an incoming call processing mode corresponding to the watching condition is provided. Thus, even if there is an incoming call when a user is watching contents, processing of the incoming call can be changed dynamically in accordance with the watching condition of the contents. Accordingly, the user's intention changing in accordance with the watching condition, for example, between the intention to give priority to watching contents and the intention to give priority to having a call, can be reflected properly, so that the convenience can be improved.

### Brief Description of the Drawings

[Fig. 1] A diagram showing the schematic configuration of a portable telephone terminal for explaining a first embodiment of the present invention.
[Fig. 2] A flow chart for explaining processing in response to an incoming call in the portable telephone terminal according to the first embodiment of the present invention.
[Fig. 3] A diagram showing the schematic configuration of a portable telephone terminal for explaining a second embodiment of the present invention.
[Fig. 4] A flow chart for explaining processing in response to an incoming call in the portable telephone terminal according to the second embodiment of the present invention.
[Fig. 5] A diagram showing the schematic configuration of a portable telephone terminal for explaining a third embodiment of the present invention.
[Fig. 6] A flow chart for explaining processing in response to an incoming call in the portable telephone terminal according to the third embodiment of the present invention.

### Description of Reference Numerals

- 100: call processing portion
- 101: wireless control portion
- 102: decoding unit
- 103: incoming call sound source
- 200: broadcast processing portion
- 201: broadcast receiving portion
- 202: decoding unit
- 301: answering machine unit
- 401: controller
- 402: liquid crystal display (LCD)
- 403: speaker (SP)
- 501: incoming call accept/reject determining unit
- 601: history count determining unit
- 602: history count storing memory
- 603: watching time determining unit
- 604: watching time storing memory
- 605: gazing time determining unit
- 606: camera

### Best Mode for Carrying Out the Invention

### (First Embodiment)

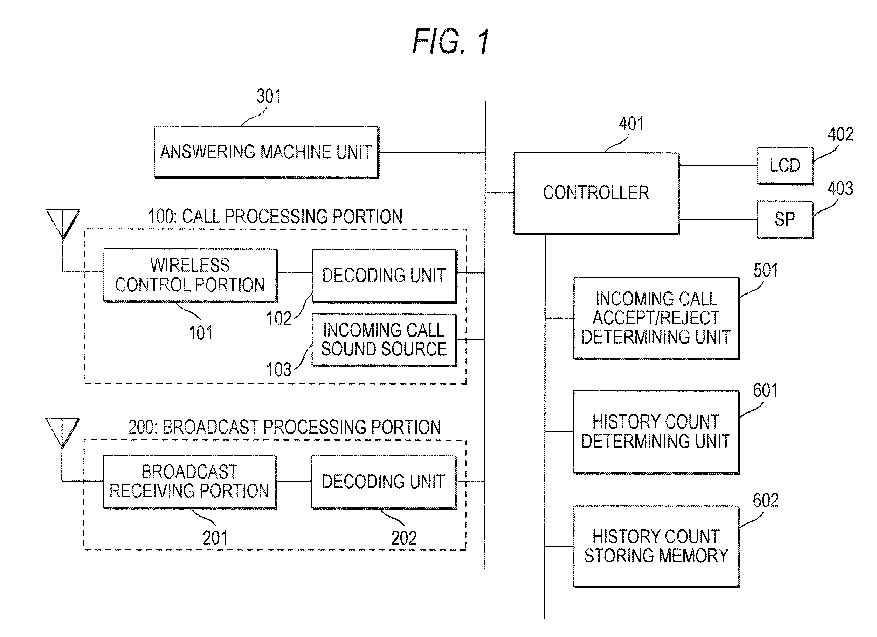

Fig. 1 is a diagram showing the schematic configuration of a portable telephone terminal for explaining a first embodiment of the present invention. As shown in Fig. 1, the portable telephone terminal according to this embodiment has a wireless control portion 101, a decoding unit 102, an incoming call sound source 103, a broadcast receiving portion 201, a decoding unit 202, an answering machine unit 301, a controller 401, a liquid crystal display (LCD) 402, a speaker 403, an incoming call accept/reject determining unit 501, a history count determining unit 601, and a history count storing memory 602.

The wireless control portion 101 controls transmission/reception of a call or an E-mail. The decoding unit 102 decodes audio data (opposite voice) received from an opposite terminal. The incoming call sound source 103 is a sound source for generating sound in response to an incoming call. The wireless control portion 101, the decoding unit 102 and the incoming call sound source 103 constitute a call processing portion 100. The broadcast receiving portion 201 receives a TV broadcast or a radio broadcast. The decoding unit 202 decodes TV pictures or the like and generates "pictures" and "sounds" continuously. The broadcast receiving portion 201 and the decoding unit 202 constitute a broadcast processing portion 200 for outputting pictures or sounds to thereby reproduce contents. The answering machine unit 301 records the opposite voice in cooperation with the call processing portion 100 in an answering machine mode.

The history count storing memory 602 records the number of accesses to each watchable TV picture channel. The history count determining unit 601 determines to continue reproducing contents in a TV broadcast or a radio broadcast when the number of accesses to a predetermined channel is not smaller than a predetermined value. In response to an incoming call, the incoming call accept/reject determining unit 501 determines whether to make an answer to an incoming call signal or to set an answering machine mode, based on information from the history count determining process 601. In response to the incoming call, the controller 401 makes a control as to whether to connect the incoming call signal to the speaker (SP) 403 or to connect the incoming call signal to the answering machine unit 301, in cooperation with the incoming call accept/reject determining unit 501. The liquid crystal display (LCD) 402 displays TV pictures. The speaker 403 is an output device for reproducing sounds of a TV broadcast or a radio broadcast.

The history count storing memory 602 and the history count determining unit 601 grasp the watching condition of contents being reproduced. The controller 401 and the incoming call accept/reject determining unit 501 execute reproduction of contents and processing of an incoming call in an incoming call processing mode corresponding to the watching condition. The call processing portion 100, the answering machine unit 301, the LCD 402 and the SP 403 performs the processing of an incoming call.

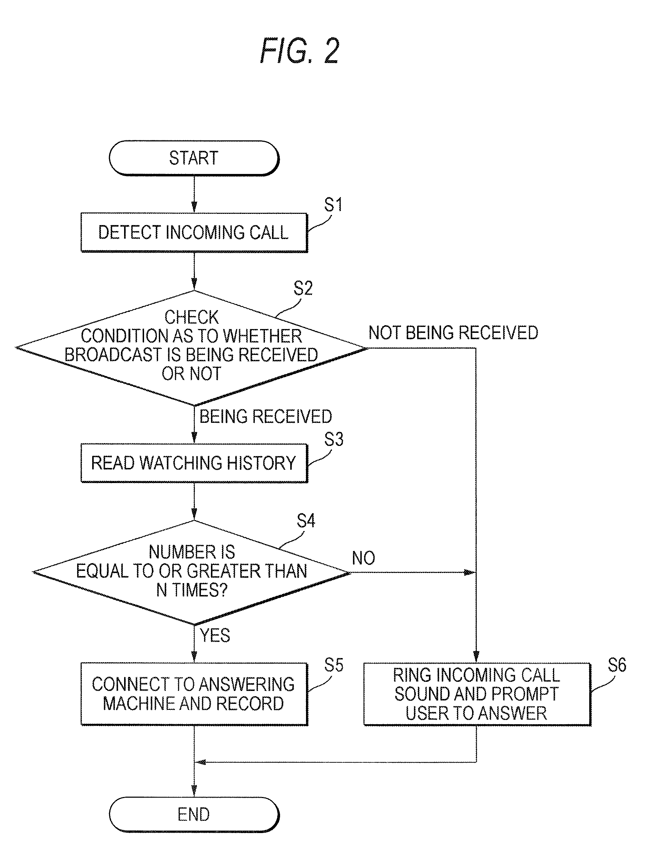

Fig. 2 is a flow chart for explaining processing in response to an incoming call in the portable telephone terminal according to the first embodiment. As shown in Fig. 2, in the portable telephone terminal according to this embodiment, when the controller 401 detects an incoming call (Step S1), the condition as to whether a broadcast is being received or not is checked (Step S2).

When a broadcast is being received, a watching history of a broadcast program being watched currently is read out from the history count storing memory 602 (Step S3), and it is determined whether the number of times of watching the program reaches, for example, at least N times or not (Step S4). When the number of times of watching the program reaches at least N times (Yes), it is concluded that user's eagerness for this broadcast program is high, and watching the broadcast program is continued, while an incoming call signal is connected to the answering machine unit 301 and recorded (Step S5).

On the other hand, assume that it is concluded in the condition check in Step S2 that no broadcast is being received. In this case, when the number of times of watching the program is smaller than N times according to the watching history determination in Step S4 (No), an incoming call sound is rung to inform the user of the incoming call and prompt the user to make an answer (Step S6). In this case, the screen may be switched from a broadcast screen to an incoming call screen, or the incoming call sound may be rung while receiving the broadcast is continued. Further, the sound level of the broadcast may be lowered.

When the incoming call signal is connected to the answering machine unit 301 and recorded in Step S5, setting can be done to prevent the incoming call sound from being rung. An icon indicating an incoming call may be displayed in a part of the screen in response to the incoming call so as to inform the user of the incoming call. The incoming call icon may be displayed after the termination of the broadcast program being watched, so as to inform the user of the incoming call.

In the portable telephone terminal according to the first embodiment, the number of times of watching a broadcast program (the number of accesses to contents) is counted to grasp the watching condition of the broadcast program (contents). Thus, the user's eagerness for the broadcast program (contents) is determined. When the user is watching a program the user wants to watch, priority is given to reproduction of the program, and the mode is changed to the answering machine mode to record the incoming call. Thus, reproduction of contents and processing of an incoming call are carried out in an incoming call processing mode corresponding to the watching condition. In this manner, even if there is an incoming call when the user is watching contents, processing of the incoming call can be changed dynamically in accordance with the watching condition of the contents. Accordingly, the user's intention changing in accordance with the watching condition, for example, between the intention to give priority to watching contents and the intention to give priority to having a call, can be reflected properly, so that the convenience can be improved. In addition, troublesome setting to be done manually in advance can be made dispensable. It is therefore possible to avoid a failure in operation, such as a failure in remembering to release setting performed in advance.

### (Second Embodiment)

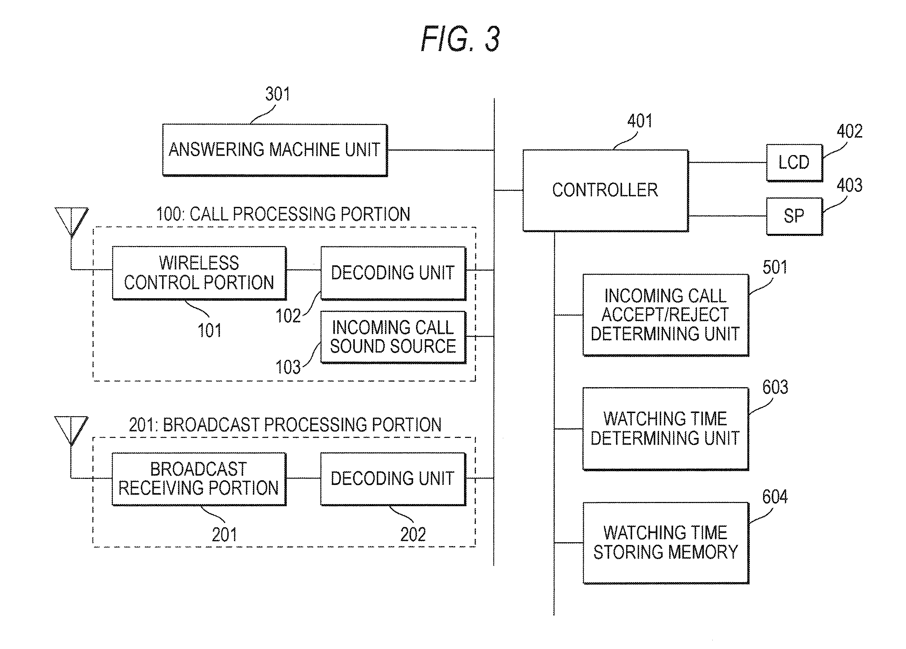

Fig. 3 is a diagram showing the schematic configuration of a portable telephone terminal for explaining a second embodiment of the present invention. In Fig. 3, parts overlapping those in the first embodiment are referenced correspondingly in the description thereof.

The portable telephone terminal according to the second embodiment has a wireless control portion 101, a decoding unit 102, an incoming call sound source 103, a broadcast receiving portion 201, a decoding unit 202, an answering machine unit 301, a controller 401, a liquid crystal display (LCD) 402, a speaker 403, an incoming call accept/reject determining unit 501, a watching time determining unit 603, and a watching time storing memory 604.

The wireless control portion 101 controls transmission/reception of a call or an E-mail. The decoding unit 102 decodes audio data (opposite voice) received from an opposite terminal. The incoming call sound source 103 is a sound source for generating sound in response to an incoming call. The wireless control portion 101, the decoding unit 102 and the incoming call sound source 103 constitute a call processing portion 100. The broadcast receiving portion 201 receives a TV broadcast or a radio broadcast. The decoding unit 202 decodes TV pictures or the like and generates "pictures" and "sounds" continuously. The broadcast receiving portion 201 and the decoding unit 202 constitute a broadcast processing portion 200 for outputting pictures or sounds to thereby reproduce contents. The answering machine unit 301 records the opposite voice in cooperation with the call processing portion 100 in an answering machine mode.

The watching time storing memory 604 records the access time of access to each watchable TV picture channel. The watching time determining unit 603 determines to continue reproducing TV pictures of a TV broadcast or a radio broadcast when the access time to a predetermined channel is not smaller than a predetermined value. In response to an incoming call, the incoming call accept/reject determining unit 501 determines whether to make an answer to an incoming call signal or to set an answering machine mode, based on information from the watching time determining unit 603. In response to the incoming call, the controller 401 makes a control as to whether to connect the incoming call signal to the speaker (SP) 403 or to connect the incoming call signal to the answering machine, in cooperation with the incoming call accept/reject determining unit 501. The liquid crystal display (LCD) 402 displays TV pictures. The speaker 403 is an output device for reproducing sounds.

The watching time storing memory 604 and the watching time determining unit 603 grasp the watching condition of contents being reproduced. The controller 401 and the incoming call accept/reject determining unit 501 execute reproduction of contents and processing of an incoming call in an incoming call processing mode corresponding to the watching condition. The call processing portion 100, the answering machine unit 301, the LCD 402 and the SP 403 performs the processing of an incoming call.

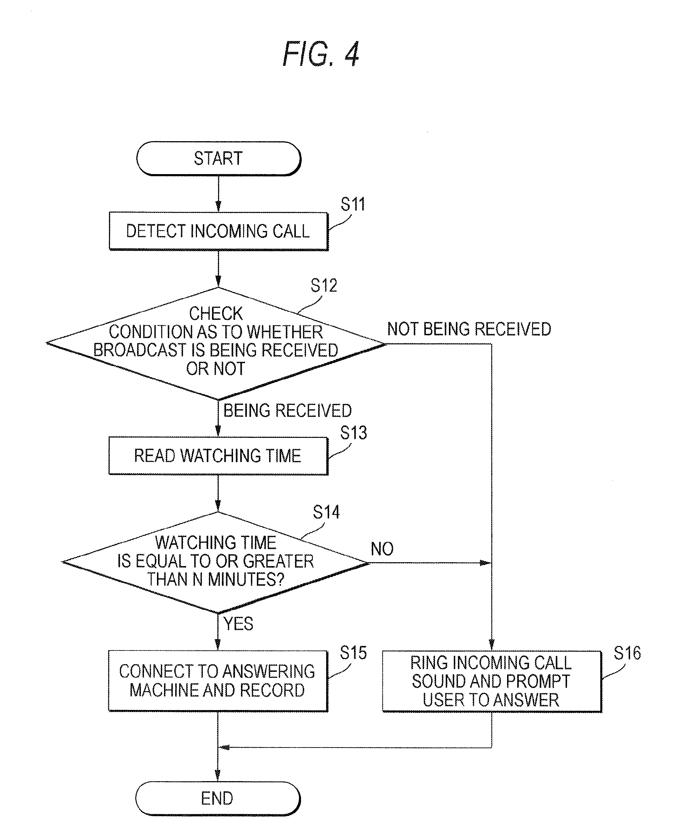

Fig. 4 is a flow chart for explaining processing in response to an incoming call in the portable telephone terminal according to the second embodiment. As shown in Fig. 4, in the portable telephone terminal according to the second embodiment, when the controller 401 detects an incoming call (Step S11), the condition as to whether a broadcast is being received or not is checked (Step S12).

When a broadcast is being received, a watching time of a broadcast program being watched currently is read out from the watching time storing memory 604 (Step S13), and it is determined whether the watching time reaches, for example, at least N minutes or not (Step S14). When the watching time reaches at least N minutes (Yes), it is concluded that user's eagerness for this broadcast program is high, and watching the broadcast program is continued, while an incoming call signal is connected to the answering machine unit 301 and recorded (Step S15).

On the other hand, assume that it is concluded in the condition check in Step S12 that no broadcast is being received. In this case, when the watching time is smaller than N minutes according to the watching time determination in Step S14 (No), an incoming call sound is rung to inform the user of the incoming call and prompt the user to make an answer (Step S16). In this case, the screen may be switched from a broadcast screen to an incoming call screen, or the incoming call sound may be rung while receiving the broadcast is continued. Further, the sound level of the broadcast may be lowered.

When the incoming call signal is connected to the answering machine unit 301 and recorded in Step S15, setting can be done to prevent the incoming call sound from being rung. An icon indicating an incoming call may be displayed in a part of the screen in response to the incoming call so as to inform the user of the incoming call. The incoming call icon may be displayed after the termination of the broadcast program being watched, so as to inform the user of the incoming call.

In the portable telephone terminal according to the second embodiment, the time of access to contents is counted to grasp the watching condition of contents. Thus, the user's eagerness for the contents is determined. When the user is watching a program the user wants to watch, priority is given to reproduction of the program, and the mode is changed to the answering machine mode to record the incoming call. Thus, reproduction of contents and processing of an incoming call are carried out in an incoming call processing mode corresponding to the watching condition. In this manner, even if there is an incoming call when the user is watching contents, processing of the incoming call can be changed dynamically in accordance with the watching condition of the contents. Accordingly, the user's intention changing in accordance with the watching condition, for example, between the intention to give priority to watching contents and the intention to give priority to having a call, can be reflected properly, so that the convenience can be improved. In addition, troublesome setting to be done manually in advance can be made dispensable. It is possible to avoid a failure in operation, such as a failure in remembering to release setting performed in advance.

### (Third Embodiment)

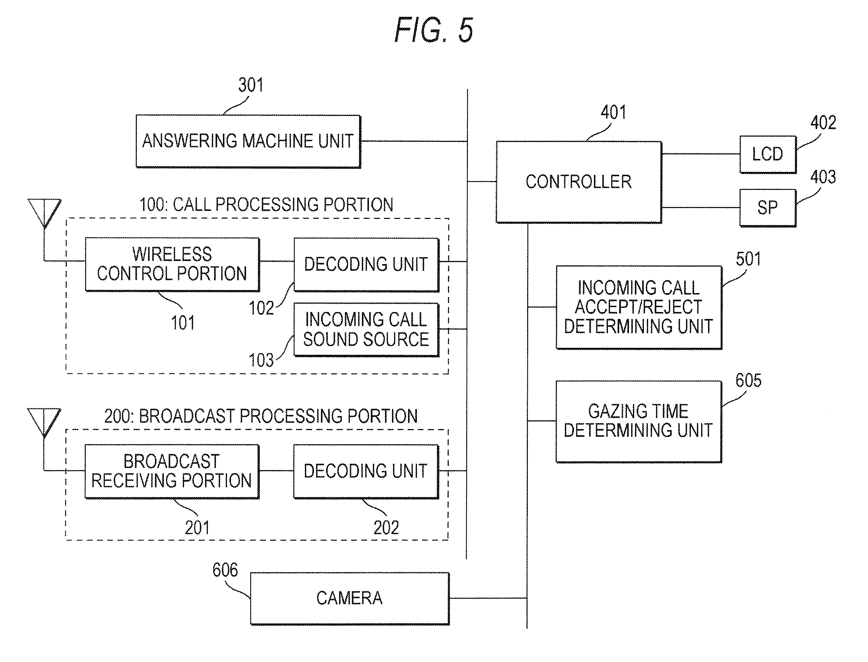

Fig. 5 is a diagram showing the schematic configuration of a portable telephone terminal for explaining a third embodiment of the present invention. In Fig. 5, parts overlapping those in the second embodiment are referenced correspondingly in the description thereof.

The portable telephone terminal according to the third embodiment has a wireless control portion 101, a decoding unit 102, an incoming call sound source 103, a broadcast receiving portion 201, a decoding unit 202, an answering machine unit 301, a controller 401, a liquid crystal display (LCD) 402, a speaker 403, an incoming call accept/reject determining unit 501, a gazing time determining unit 605, and a camera 606.

The wireless control portion 101 controls transmission/reception of a call or an E-mail. The decoding unit 102 decodes audio data (opposite voice) received from an opposite terminal. The incoming call sound source 103 is a sound source for generating sound in response to an incoming call. The wireless control portion 101, the decoding unit 102 and the incoming call sound source 103 constitute a call processing portion 100. The broadcast receiving portion 201 receives a TV broadcast or a radio broadcast. The decoding unit 202 decodes TV pictures or the like and generates "pictures" and "sounds" continuously. The broadcast receiving portion 201 and the decoding unit 202 constitute a broadcast processing portion 200 for outputting pictures or sounds to thereby reproduce contents. The answering machine unit 301 records the opposite voice in cooperation with the call processing portion 100 when the user cannot make an answer to an incoming call.

The camera 606 photographs the face of the user watching a TV broadcast. The gazing time determining unit 605 activates the camera 606 during reception of a broadcast or in response to an incoming call or the like, so as to recognize the eyeball condition (position, eye pattern, etc.), and determine the gazing time of a TV program. In response to an incoming call, the incoming call accept/reject determining unit 501 determines whether to make an answer to an incoming call signal or to set an answering machine mode, based on information from the gazing time determining unit 605. In response to the incoming call, the controller 401 makes a control as to whether to connect the incoming call signal to the speaker (SP) 403 or to connect the incoming call signal to the answering machine, in cooperation with the incoming call accept/reject determining unit 501. The liquid crystal display (LCD) 402 displays TV pictures. The speaker 403 is an output device for reproducing sounds of a TV broadcast or a radio broadcast.

The camera 606 and the gazing time determining unit 605 grasp the watching condition of contents being reproduced. The controller 401 and the incoming call accept/reject determining unit 501 execute reproduction of contents and processing of an incoming call in an incoming call processing mode corresponding to the watching condition. The call processing portion 100, the answering machine unit 301, the LCD 402 and the SP 403 performs the processing of an incoming call.

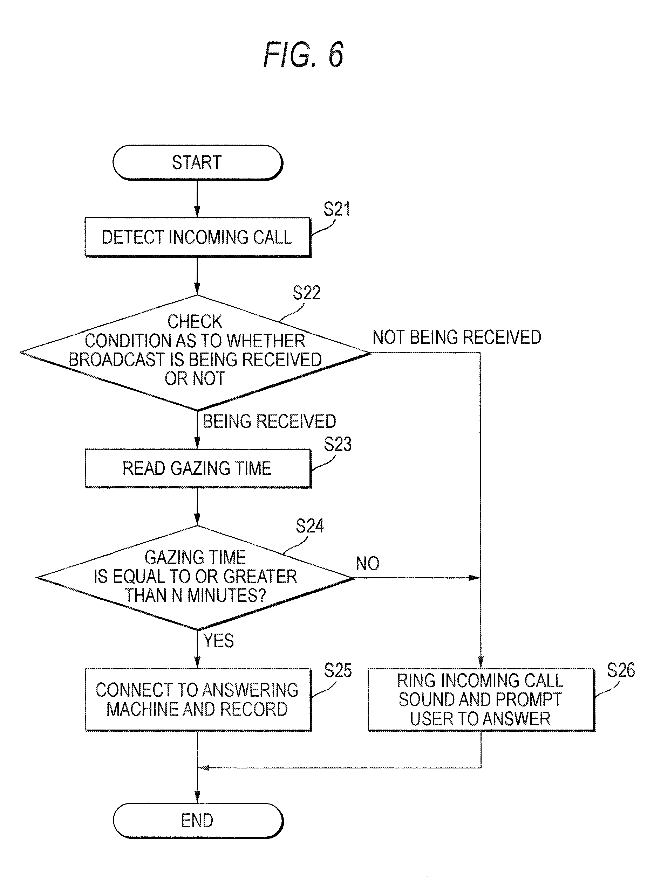

Fig. 6 is a flow chart for explaining processing in response to an incoming call in the portable telephone terminal according to the third embodiment. As shown in Fig. 6, in the portable telephone terminal according to the third embodiment, when the controller 401 detects an incoming call (Step S21), the condition as to whether a broadcast is being received or not is checked (Step S22).

When a broadcast is being received, a gazing time of a broadcast program being watched currently is read out by the gazing time determining unit 605 (Step S23), and it is determined whether the gazing time reaches, for example, at least N minutes or not (Step S24). When the gazing time reaches at least N minutes (Yes), it is concluded that user's eagerness for this broadcast program is high, and watching the broadcast program is continued, while an incoming call signal is connected to the answering machine unit 301 and recorded (Step S25).

On the other hand, assume that it is concluded in the condition check in Step S22 that no broadcast is being received. In this case, when the gazing time is smaller than N minutes according to the gazing time determination in Step S24 (No), an incoming call sound is rung to inform the user of the incoming call and prompt the user to make an answer (Step S26). In this case, the screen may be switched from a broadcast screen to an incoming call screen, or the incoming call sound may be rung while receiving the broadcast is continued. Further, the sound level of the broadcast may be lowered.

When the incoming call signal is connected to the answering machine unit 301 and recorded in Step S25, setting can be done to prevent the incoming call sound from being rung. An icon indicating an incoming call may be displayed in a part of the screen in response to the incoming call so as to inform the user of the incoming call. The incoming call icon may be displayed after the termination of the broadcast program being watched, so as to inform the user of the incoming call.

In the portable telephone terminal according to the third embodiment, the camera is activated during reception of a broadcast or in response to an incoming call or the like so as to recognize the eyeball condition and determine whether the condition is a gazing condition or not. Thus, the watching condition of contents is grasped so that the user's eagerness for the contents is determined. When the user is watching a program the user wants to watch, priority is given to reproduction of the program, and the mode is changed to the answering machine mode to record the incoming call. Thus, reproduction of contents and processing of an incoming call are carried out in an incoming call processing mode corresponding to the watching condition. In this manner, even if there is an incoming call when the user is watching contents, processing of the incoming call can be changed dynamically in accordance with the watching condition of the contents. Accordingly, the user's intention changing in accordance with the watching condition, for example, between the intention to give priority to watching contents and the intention to give priority to having a call, can be reflected properly, so that the convenience can be improved. In addition, troublesome setting to be done manually in advance can be made dispensable. It is possible to avoid a failure in operation, such as a failure in remembering to release setting performed in advance.

In the embodiments, the watching condition of a predetermined broadcast program (contents) is grasped from the number of accesses to the contents or the like, and reproduction of the contents and processing of an incoming call are carried out in an incoming call processing mode corresponding to the watching condition. However, the latitude of user's operation can be widened if an expressing unit for expressing the watching condition of the contents graphically in advance (before an incoming call). For example, when a broadcast program for which the eagerness of the user is high is being watched by the user, the latitude of user's operation can be widened if a predetermined icon or a message "Answering machine mode will be set if an incoming call arrives now." or the like is displayed in advance (before the incoming call).

Although the case where TV broadcasts or radio broadcasts are used as contents to be reproduced has been shown by way of example, the contents may be games, video, music, etc. When the contents are games, reproduction of the contents means execution of application software of the games. When the contents are video, reproduction of the contents means video reproduction. When the contents are music, reproduction of the contents means music reproduction.

In the embodiment, the watching condition is grasped by detecting user's gaze by use of a capturing unit. However, the watching condition may be grasped by detecting user's operation through operation of buttons, keys, a dial, a remote controller, etc. Alternatively, the watching condition may be grasped by a sensor such as a touch sensor, an acceleration sensor, a vibration sensor or the like for detecting that the user is holding the terminal.

Although the example where processing of an incoming call is carried out to continue reproduction of contents and change the mode into the answering machine mode has been shown in the description, processing of an incoming call may be carried out to give a busy signal to a call sender or reproduce a response message to thereby notify the call sender of impossibility to answer in response to the incoming call.

Although the example where the user is notified of an incoming call by display or sound during reproduction of contents has been shown in the description, the user may be notified of the incoming call by generation of visible light or generation of vibration. Likewise the user may be notified of the incoming call by generation of visible light or generation of vibration after the reproduction of the contents is terminated or after the reproduction of the contents is suspended.

Although a portable telephone terminal has been shown in the description by way of example, the present invention can be carried out likewise upon a stationary telephone set, a mail receiving terminal, an instant message transmitting/receiving terminal, an online game machine, a PDA with a communication function or a call function, a TV set, a headphone stereo, a robot, a wearable terminal, etc.

Although the present invention has been described in detail and with reference to its specific embodiments, it is obvious for those skilled in the art that various changes or modifications can be made on the present invention without departing from its spirit and scope.

This application is based on a Japanese patent application (Patent Application No. 2004-251530) filed on August 31, 2004, the contents of which are incorporated herein by reference.

### Industrial Applicability

In the present invention, a control unit that carries out reproduction of contents and processing of an incoming call in an incoming call processing mode corresponding to the watching condition is provided. Thus, even if there is an incoming call when a user is watching contents, processing of the incoming call can be changed dynamically in accordance with the watching condition of the contents. Accordingly, there is an effect that the user's intention changing in accordance with the watching condition, for example, between the intention to give priority to watching contents and the intention to give priority to having a call, can be reflected properly, so that the convenience can be improved. The present invention is useful to a communication terminal or the like having a function of reproducing contents.

## Claims

1. A communication terminal, comprising:
a contents reproducing unit that reproduces contents;
an incoming call processing unit that processes an incoming call;
a watching condition grasping unit that grasps a watching condition of contents being reproduced; and
a control unit that carries out the reproduction of the contents and the processing of the incoming call in an incoming call processing mode corresponding to the watching condition.

2. The communication terminal according to Claim 1, wherein the watching condition grasping unit includes:
a storage unit which stores a use history of the contents; and
a grasping unit which grasps the watching condition based on the use history which is acquired by referring to the storage unit.

3. The communication terminal according to claim 1, wherein the watching condition grasping unit includes:
a storage unit which stores a watching time of the contents; and
a grasping unit which grasps the watching condition based on the watching time which is acquired by referring to the storage unit.

4. The communication terminal according to claim 1, wherein the watching condition grasping unit includes a watching condition detecting unit which detects the watching condition.

5. The communication terminal according to claim 4, wherein the watching condition grasping unit includes:
a capturing unit which captures an eye of a user watching the contents; and
a grasping unit which grasps the watching condition based on a gazing time of the contents obtained from captured images.

6. The communication terminal according to claim 1, wherein the control unit carries out the processing of the incoming call so as to continue the reproduction of the contents and provide an automatic answer to the incoming call.

7. The communication terminal according to claim 6, wherein the control unit carries out the processing of the incoming call so as to continue the reproduction of the contents and change a mode into an answering machine mode.

8. The communication terminal according to claim 1, wherein the control unit carries out the processing of the incoming call so as to continue the reproduction of the contents and notify the user of the incoming call during the reproduction of the contents.

9. The communication terminal according to claim 1, wherein the control unit carries out the processing of the incoming call so as to continue the reproduction of the contents and notify the user of the incoming call after termination of the reproduction of the contents.

10. The communication terminal according to claim 1, wherein the control unit carries out the processing of the incoming call so as to suspend the reproduction of the contents and notify the user of the incoming call after suspension of the reproduction of the contents.

11. The communication terminal according to any one of claims 6 through 10, further comprising:
a setting unit that sets a desired incoming call processing mode on the control unit.
